# EUROPÄISCHE PATENTSCHRIFT

(11) **EP 3 843 227 B1**
(45) Veröffentlichungstag und Bekanntmachung des Hinweises auf die Patenterteilung: **28.01.2026**
(21) Anmeldenummer: 19219410.8
(22) Anmeldetag: 23.12.2019
(51) Int. Cl.: H02H 7/00, H02H 7/06, H02H 9/04

(54) **DOPPELT-GESPEISTE WINDENERGIEANLAGE MIT EINEM MITTELSPANNUNGSTRANSFORMATOR**
DOUBLE-FED WIND ENERGY SYSTEM WITH A MEDIUM VOLTAGE TRANSFORMER
ÉOLIENNE À DOUBLE ALIMENTATION DOTÉE D'UN TRANSFORMATEUR MOYENNE TENSION

(43) Veröffentlichungstag der Anmeldung: 30.06.2021
(73) Patentinhaber: Nordex Energy SE & Co. KG, 22419 Hamburg (DE)
(72) Erfinder: Woldmann, Thomas, 21129 Hamburg (DE); Wessels, Dr. Christian, 20357 Hamburg (DE); Bunez, Julian, 22846 Norderstedt (DE)
(74) Vertreter: Hauck Patent- und Rechtsanwälte PartmbB

(56) Entgegenhaltungen:
- EP-A2- 2 169 222
- EP-A2- 2 434 607
- CN-U- 208 782 501
- US-A1- 2013 234 434
- US-A1- 2016 333 856

## Beschreibung

Die vorliegende Erfindung betrifft eine Windenergieanlage mit einem doppelt-gespeisten Asynchrongenerator aufweisend einen Statorpfad und einen Rotorpfad, welcher einen rotorseitigen und einen netzseitigen Umrichter aufweist. Rotorpfad und Statorpfad münden in einem Kopplungspunkt und liegen über diesem gemeinsam an einem elektrischen Versorgungsnetz an. Die Anbindung der Windenergieanlage erfolgt über einen Transformator, wobei der Statorpfad und der Rotorpfad unterspannungsseitig gemeinsam auf die unterspannungsseitige Wicklung des Transformators speisen.

Die übliche Umsetzung solcher Windenergieanlagen sieht ein aufwändiges und teures Trennkonzept bestehend aus mehreren Baugruppen vor. So ist nach dem Stand der Technik unterspannungsseitig von dem Transformator wenigstens ein Leistungsschalter für den gesamten elektrischen Leistungspfad vorgesehen. Bei aktuell für solche Windenergieanlagen typischen Leistungsklassen von 5 MW und mehr, würde der Fachmann den Leistungsschalter für Stromstärken von wenigstens 6300 A ausgelegen. Zudem ist oberspannungsseitig von dem Transformator ein Mittelspannungsleistungsschalter (MVSG = Medium Voltage Switch Gear) vorgesehen, mittels dem die komplette Windenergieanlage spannungsfrei geschaltet werden kann und der diese durch das Öffnen vor einer Überlast und/oder zu hohen Kurzschlussströmen schützt.

Als Primärschutz vor Überlast und Kurzschluss dient der unterspannungsseitige Leistungsschalter für den gesamten elektrischen Leistungspfad. Dieser ist ebenfalls als sicheres Trennorgan eingerichtet und ermöglicht es, dass bei geöffnetem Leistungsschalter auf der spannungsfreien Seite sicher gearbeitet werden kann, wenn Wartungsarbeiten an der Windenergieanlage erforderlich sind. Der Leistungsschalter für den gesamten elektrischen Leistungspfad kann viele schwere und mittelschwere Fehlerfälle sicher trennen. Der Eigenbedarf der Windenergieanlage wird in der Regel vor dem Leistungsschalter abgegriffen, so dass die Windenergieanlage selbst nach schweren Fehlern noch einer Fehleranalyse zugänglich ist und Systeme, die durch den Eigenbedarf gespeist werden, wie beispielsweise elektrische Antriebe für das Verstellen von Rotorblattwinkeln oder das Ausrichten des Maschinenhauses, nicht von einem Fehler beeinträchtigt werden und auch nach dem Öffnen des unterspannungsseitigen Leistungsschalters funktionsfähig bleiben.

Windenergieanlagen nach dem Stand der Technik weisen neben dem unter- und dem oberspannungsseitigen Leistungsschalter weitere Schutzeinrichtungen auf. So weist der Leistungspfad des netzseitigen Umrichters einen netzseitigen Leistungsschalter und der Leistungspfad des Stators ein Statorschütz auf, mittels derer die beiden Leistungspfade bei Bedarf auch unabhängig mit dem Netz verbunden oder davon getrennt werden können.

Nach dem Einschalten des Leistungsschalters für den gesamten elektrischen Leistungspfad dient der netzseitige Leistungsschalter zum Verbindungen oder zum Trennen des netzseitigen Umrichters mit dem Netz. Da der Leistungspfad des netzseitigen Umrichters von doppelt-gespeisten Asynchronmaschinen auf einen wesentlich geringeren Nennstrom als der gesamte elektrische Leistungspfad ausgelegt und der netzseitige Leistungsschalter deutlich kleiner dimensioniert ist, als der unterspannungsseitige Leistungsschalter, ist der Leistungspfad zum Überlast- und Kurzschlussschutz mit einer zusätzlichen Absicherung ausgestattet.

Ist das Statorschütz geschlossen, ist der Stator des Generators mit dem Netz verbunden. Das Öffnen und Schließen des Schützes erfolgt bei geringen Strömen, um eine Abnutzung des Schützes zu minimieren. Über- und Kurzschlussströme werden durch den Leistungsschalter für den gesamten elektrischen Leistungspfad abgeschaltet, danach wird das Statorschütz stromlos geschaltet.

Für die beispielhaft beschriebene Windenergieanlage von 5 MW würde der Fachmann gemäß dem Stand der Technik neben dem unterspannungsseitigen Leistungsschalter für Stromstärken von 6300 A ein Statorschütz für 4000 A und einen netzseitigen Leistungsschalter für 2000 A vorsehen. Bei einer solchen Windenergieanlage würden wirtschaftlich betrachtet insgesamt Trennschalter für 12300 A vorgesehen sein, was mit entsprechenden Kosten verbunden ist.

Aus EP 1 914 877 A2 ist eine Windenergieanlage mit einem doppelt-gespeisten Asynchrongenerator bekannt geworden, die Fault-Ride-Through-fähig ist. Die Asynchronmaschine speist über einen Transformator in ein Energieversorgungsnetz ein. Die Windenergieanlage verfügt über ein Schaltersystem bestehend aus einem Statorschalter, einem Rotorschalter, einem unterspannungsseitigen Hauptschalter und einem oberspannungsseitigen Netzschalter. Das gleiche System findet sich unverändert in einer Vielzahl jüngerer Patentanmeldungen, wie zum Beispiel der WO 2018/208649 A1.

Aus US 2013/0234434 A1 ist ein Überspannungsschutz für eine Windenergieanlage bekannt geworden, bei der eine aktuell an einem Transformator anliegende Netzspannung gemessen und im Falle einer Überspannung der Transformator kurzgeschlossen wird.

Aus US 2016/033856 A1 ist eine Windenergieanlage mit einem doppelt gespeisten Asynchrongenerator bekannt geworden, der für einen Fault Ride Through ausgelegt ist. Hierzu kann eine Impedanz variabel geschaltet werden, wobei in Serie geschaltete Fehlerstromschalter (FCL) die Anlage vor einem Überstrom schützen. Windenergieanlagen mit Umrichtersystemen und Überspannungsschutzschaltungen sind auch aus den folgenden Dokumenten bekannt: EP2169222A2 und EP2434607A2.

Ausgehend vom Stand der Technik liegt der Erfindung die Aufgabe zugrunde, eine doppelt-gespeiste Windenergieanlage bereitzustellen, die ein sicheres und kostengünstiges Trennkonzept aufweist, welches sämtliche herkömmlichen Anforderungen an die Betriebssicherheit von Windenergieanlagen und den Personenschutz erfüllt.

Erfindungsgemäß wird die Aufgabe durch eine doppelt-gespeiste Windenergieanlage mit den Merkmalen aus Anspruch 1 gelöst. Vorteilhafte Ausgestaltungen bilden den Gegenstand der Unteransprüche.

Die erfindungsgemäß ausgebildete doppelt-gespeiste Windenergieanlage besitzt einen Statorpfad und einen Rotorpfad, der einen rotorseitigen und einen netzseitigen Umrichter aufweist. Der Rotorpfad und der Statorpfad münden in einem Kopplungspunkt. Über den Kopplungspunkt sind Rotorpfad und Statorpfad gemeinsam über einen Mittelspannungstransformator an ein elektrisches Versorgungsnetz angeschlossen, d.h. Rotorpfad und Statorpfad speisen bevorzugt unterspannungsseitig gemeinsam auf dieselbe Wicklung des Mittelspannungstransformators. Erfindungsgemäß ist vorgesehen, dass jeweils ein Statorschütz in dem Statorpfad und ein Leistungsschalter in dem Rotorpfad vorgesehen sind, wobei eine erste Überspannungsschutzeinrichtung zwischen Mittelspannungstransformator und Statorschütz vorgesehen ist. Die Überspannungsschutzeinrichtung schützt das Statorschütz vor Überspannung aus dem Mittelspannungsnetz. Die erste Überspannungsschutzeinrichtung schützt das Statorschütz vor Überspannung aus dem Mittelspannungsnetz. Das Statorschütz wird damit in das Schutzkonzept der Windenergieanlage integriert. Seine Leistungsfähigkeit bezüglich Führen und Schalten von Kurzschlussströmen wird durch die Überspannungsschutzeinrichtung geprüft und garantiert Der besondere Vorteil der erfindungsgemäßen doppelt gespeisten Windenergieanlage besteht darin, dass auf den Hauptleistungsschalter auf Niederspannungsseite verzichtet werden und entsprechenden Kosten vermieden werden können. Ausreichend sind Statorschütz in dem Statorpfad und Leistungsschalter in dem Rotorpfad.

Erfindungsgemäß ist eine zweite Überspannungsschutzeinrichtung in dem Statorpfad zwischen dem Statorschütz und dem Stator vorgesehen. Auch die zweite Überspannungsschutzeinrichtung dient dazu, das Statorschütz vor Überspannung, diesmal vor Überspannung vom Generator, zu schützen.

In einer bevorzugten Weiterbildung ist eine dritte Überspannungsschutzeinrichtung in dem Rotorpfad vorgesehen. Die dritte Überspannungsschutzeinrichtung ist hierbei bevorzugt zwischen dem Generatorrotor und dem rotorseitigen Umrichter vorgesehen. Die dritte Überspannungsschutzeinrichtung schützt den rotorseitigen Umrichter vor Überspannung von dem Generator.

In einer bevorzugten Ausgestaltung ist mindestens eine der Überspannungsschutzeinrichtungen, bevorzugt jede der Überspannungsschutzeinrichtungen für einen Schutzpegel von Uₚ ≦ 5 kV ausgelegt.

Bei der erfindungsgemäßen Windenergieanlage ist die erste Überspannungsschutzeinrichtung zwischen dem Kopplungspunkt und dem Mittelspannungstransformator vorgesehen. Die erste Überspannungsschutzeinrichtung ist sensitiv auf eine in dem Mittelspannungsnetz vorliegende Überspannung und kann durch die Überspannung verursachte Stromspitzen ableiten, wenn der Schutzpegel überschritten wird. Somit werden Statorschütz und der Leistungsschalter in dem Rotorpfad vor den Stromspitzen geschützt. In einer bevorzugten Weiterbildung ist eine Eigenbedarfsversorgung für die Windenergieanlage zwischen der ersten Überspannungsschutzeinrichtung und dem Mittelspannungstransformator vorgesehen. Über die Eigenbedarfsversorgung werden wichtige Funktionen der Windenergieanlage bei einem Ausfall des Netzes versorgt.

Ferner ist oberspannungsseitig von dem Mittelspannungstransformator bevorzugt ein Mittelspannungsschalter vorgesehen. Über diesen kann die Windenergieanlage auf der Mittelspannungsebene spannungsfrei geschaltet und vom Netz getrennt werden.

Eine bevorzugte Ausführungsform der Erfindung wird nachfolgend näher beschrieben. Es zeigen:
- Fig. 1: eine Windenergieanlage in einer Ansicht von der Seite und
- Fig. 2: ein schematisches Schaltbild einer doppelt-gespeisten Asynchronmaschine mit ihrem Anschluss an das Mittelspannungsnetz.

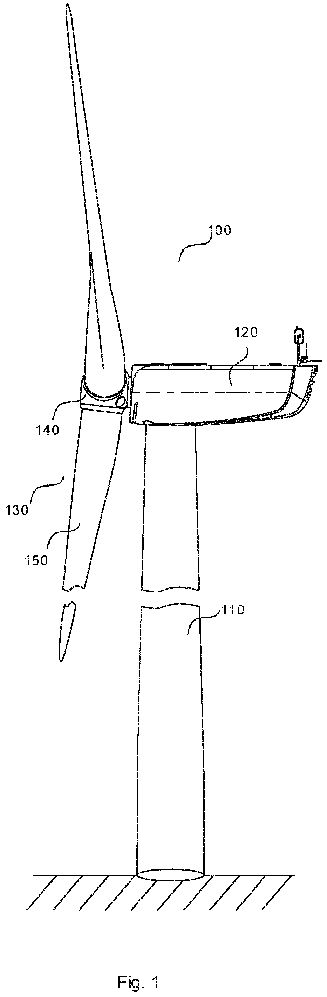

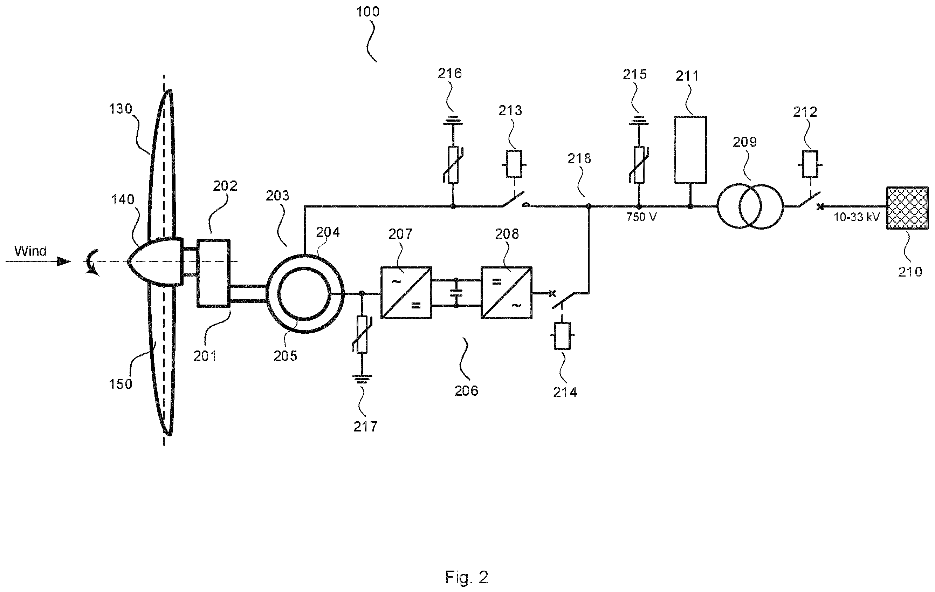

Fig. 1 zeigt eine Windenergieanlage 100 mit einem Turm 110 und einer Gondel 120. Die Gondel 120 ist über ein (nicht dargestelltes) Azimutsystem um eine Turmlängsachse drehbar gelagert und kann so entsprechend der Windrichtung ausgerichtet werden. Die Gondel 120 beherbergt einen Antriebsstrang (siehe Fig. 2), der mit einem Rotor 130 verbunden ist, der mit einer Rotornabe 140 und drei Rotorblättern 150 ausgestattet ist. Über den Rotor 130 wird kinetische Energie aus dem Wind aufgenommen und über einen Generator in elektrische Energie gewandelt.

Fig. 2 zeigt eine schematische Ansicht der Windenergieanlage 100 im Hinblick auf ihre Einspeisung in ein Mittelspannungsnetz 210. Fig. 2 zeigt zur besseren Übersicht die Einspeisung in das Mittelspannungsnetz für eine einzelne Windenergieanlage, wobei die Einspeisung auch über mehrere Windenergieanlagen, die beispielsweise in einem Windpark zusammengefasst sind, erfolgen kann. Der Antriebsstrang 201 der Windenergieanlage ist über die Rotornabe 140 mit dem Rotor 130 verbunden und eingerichtet, mechanische Energie des Rotors 130 über eine Drehbewegung auf den Generatorrotor 205 eines Generators 203 zu übertragen. Die Übertragung erfolgt mittels eines Getriebes 202. Der Antriebsstrang 201 weist eine Welle auf, die mit dem Generatorrotor 205 verbunden ist und diesen zur Umwandlung der mechanischen Energie in elektrische Energie dreht. In dem Ausführungsbeispiel ist ein doppelt-gespeister Asynchrongenerator 203 vorgesehen, dessen Generatorstator 204 über einen Statorpfad und dessen Generatorrotor 205 über einen Rotorpfad elektrisch mit dem Netz verbunden ist und dieses elektrische Energie bzw. Leistung einspeist. Im Rotorpfad vorgesehen ist ein Umrichter 206, der einen rotorseitigen Umrichter 207 und einen netzseitigen Umrichter 208 aufweist. Zwischen den Umrichtern 207, 208 ist ein Gleichspannungszwischenkreis vorgesehen. Rotorpfad des Generatorrotors 205 und Statorpfad des Generatorstators 204 sind über einem Kopplungspunkt 218 gemeinsam mit der unterspannungsseitigen Wicklung eines Mittelspannungstransformators 209 mit dem Mittelspannungsnetz 210 verbunden. Zwischen Kopplungspunkt 218 und Mittelspannungstransformator 209 ist ein Eigenbedarfsnetz 211 vorgesehen. Über das Eigenbedarfsnetz 211 können wichtige Komponenten, wie beispielsweise die Anlagensteuerung, Pitch- und Azimutverstellantriebe und die Flugbefeuerung betrieben werden, selbst wenn Rotor- und Statorpfad geöffnet sind und die Windenergieanlage nicht in das Netz 210 einspeist. Zwischen Mittelspannungstransformator 209 und Mittelspannungsnetz 210 ist eine Mittelspannungsschaltanlage 212 vorgesehen, mit der die gesamte Windenergieanlage einschließlich ihres Mittelspannungstransformators vom Mittelspannungsnetz getrennt werden kann.

Eine erste Überspannungsschutzeinrichtung 215 befindet sich zwischen dem Mittelspannungstransformator 209 und dem Kopplungspunkt 218, in dem Statorpfad und Rotorpfad zusammenfließen. Durch ein Statorschütz 213 kann der Statorpfad getrennt werden. Im Statorpfad ist zwischen Statorschütz 213 und Generatorstator 204 die zweite Überspannungsschutzeinrichtung 216 vorgesehen. Im Rotorpfad ist ein Leistungsschalter 214 zwischen dem netzseitigen Umrichter 208 und dem Kopplungspunkt 218 vorgesehen. Eine dritte Überspannungsschutzeinrichtung 217 ist ebenfalls im Rotorpfad vorgesehen und befindet sich zwischen dem Generatorrotor 205 und dem rotorseitigen Umrichter 207. Das Statorschütz 213 der beispielhaften Windenergieanlage ist auf Stromstärken von für 4000 A, der Leistungsschalter 214 auf Stromstärken von 2000 A ausgelegt. Aus wirtschaftlicher Sichtweise werden unterspannungsseitig von dem Transformator somit Schaltvorrichtungen für insgesamt 6000 A vorgesehen.

Mit der vorstehenden Ausgestaltung erfolgt eine deutliche Reduktion von Kosten und Platzbedarf im Umrichter. Der Gesamtstrom der Schalter wird auf Niederspannungsseite mit 6000 A gegenüber dem Stand der Technik (12300 A) deutlich reduziert. Bei der erfindungsgemäßen Lösung entfällt ein Leistungsschalter für den gesamten elektrischen Leistungspfad auf der Niederspannungsseite von 6300 A. Es ist lediglich ein Statorschütz 213 im Statorpfad und ein Leistungsschalter 214 im Rotorpfad vorgesehen. Dieser Leistungsschalter 214 trennt den Rotorpfad zuverlässig vom Netz. Als sicheres Trennorgan kann nach dem Freischalten hinter dem Leistungsschalter 214 sicherer gearbeitet werden. Ein Ausschalten des Leistungsschalters 214 erfolgt in der Regel nur zu Wartungs- und Servicezwecken wenige Male im Jahr. Da es in der Regel nur zu wenigen Auslösungen des Leistungsschalters 214 durch Fehler oder Störungen sowie Überströme kommt, reicht eine geringe Schaltspielzahl von wenigen Tausend für die geforderte Lebensdauer aus, wodurch ebenfalls Kosten eingespart werden können.

Das Statorschütz 213 schaltet betriebsbedingt mit geringen Strömen ein und aus. Damit nicht für jeden mittelschweren Fehlerfall eine Lasttrennung vorgenommen werden muss, wird das Statorschütz 213 derart ausgelegt, dass die überwiegenden möglichen Fehler von dem Statorschütz getrennt werden können. Alternativ müsste bei einer Vielzahl von Fehlern die Freischaltung durch den Mittelspannungsschalter 212 erfolgen. Ein Freischalten durch den Mittelspannungsschalter 212 führt jedoch zu hohen Ausfallzeiten der Windenergieanlage und damit zu Ertragseinbrüchen. Des Weiteren liegt durch die aktuelle Umsetzung des Abgriffes für den Eigenbedarf auf der Niederspannungsseite kein Eigenbedarf mehr an, um Funktionen, wie Pitchen, Yawen oder Kommunikation ausführen zu können. Der Mittelspannungsschalter 212 schaltet demnach nur bei einem länger anhaltenden Kurzschluss oder einem Erdschluss im Mittelspannungstransformator 209, wenn Statorschütz 213 oder Leistungsschalter 214 auf Anforderung sich nicht allpolig vom Netz trennen und wenn Isolationsfehler zwischen Mittelspannungstransformator 209 und Leistungsschalter 214 oder Statorschütz 213 auftreten.

Kommt es zwischen dem Statorschütz 213 und dem Generatorstator 204 zu einem möglichen Erdschluss, so sind die Erdschlussströme gering und werden durch das Statorschütz sicher und kurzfristig abgeschaltet. Der Mittelspannungsschalter 212 bleibt in diesem Fall eingeschaltet. Die Wahrscheinlichkeit für einen gleichzeitig auftretenden, mehrpoligen Erdschluss ist sehr gering. Durch konstruktive Maßnahmen, im Wesentlichen im Kabelanschlussbereich des Umrichters und des Generators, kann ein direkter Kurzschluss zwischen zwei oder drei Statorphasen ausgeschlossen werden. Käme es zu einem Kurzschluss auf der Statorseite, würden erhöhte Kurzschlussströme auftreten. Dieser Kurzschlussstrom wird vom Netz wie auch vom Generator gespeist, wobei die Höhe des Kurzschlussstroms abhängig ist von der Impedanz des Mittelspannungstransformators und des Generators. Dieser Kurzschlussstrom würde somit von zwei Seiten eingespeist werden. Diese müssten durch den Mittelspannungsschalter 212 getrennt werden. Die Statorschütze 213 könnten durch die dadurch auftretenden Kurzschlussströme überlastet und zerstört werden, auch wenn der Kurzschlussstrom nur geführt und nicht geschaltet wird. Daher muss ein Kurzschluss auf der Statorseite vermieden werden.

Ein Kurzschluss auf der Rotorseite im Umrichter oder im Generator kann nicht, wie auf der Statorseite, ausgeschlossen werden. Bei doppelt gespeisten Generatoren mit Schleifringläufer kann es beispielsweise durch leitenden Bürstenstaub zu Erd- oder Kurzschlüssen über Lichtbögen kommen. Im Umrichter können u.a. durch defekte Leistungsmodule Kurzschlüsse entstehen. Beispielsweise kann es durch legierte Leistungsmodule dem Umrichter nicht länger möglich sein, durch Pulssperre der IGBTs den Kurzschlussstrom auszuschalten, so dass dieser auch längere Zeit anliegt. Der Kurzschluss auf Rotorseite kann über den Generator gespeist werden, wodurch es auch auf der Statorseite zu erhöhten Kurzschlussströmen kommen kann. Die Höhe der Kurzschlussströme auf der Statorseite ist durch einen Kurzschluss auf der Rotorseite hervorgerufen worden und hängt ebenfalls von den Impedanzen des Generators und des Mittelspannungstransformators ab. Die Impedanzen liegen hierbei jedoch in Reihe und sind somit wesentlich größer als wenn der Kurzschluss direkt auf der Statorseite auftreten würde. Es treten somit reduzierte Kurzschlussströme auf der Statorseite auf, welche durch die Statorschütze ausgeschaltet werden müssen, ohne dass der Mittelspannungsschalter 212 die Windenergieanlage komplett vom Netz trennt.

### Bezugszeichenliste

- 100: Windenergieanlage
- 110: Turm
- 120: Gondel
- 130: Rotor
- 140: Rotornabe
- 150: Rotorblatt
- 201: Antriebstrang
- 202: Getriebe
- 203: Doppelt gespeister Asynchrongenerator
- 204: Generatorstator
- 205: Generatorrotor
- 206: Umrichter
- 207: rotorseitiger Umrichter
- 208: netzseitiger Umrichter
- 209: Mittelspannungstransformator
- 210: Mittelspannungsnetz
- 211: Eigenbedarfsnetz
- 212: Mittelspannungsschaltanlage
- 213: Statorschütz
- 214: Leistungsschalter
- 215: erste Überspannungs-Schutzreinrichtung
- 216: zweite Überspannungs-Schutzreinrichtung
- 217: dritte Überspannungs-Schutzreinrichtung
- 218: Kopplungspunkt

## Patentansprüche

1. Windenergieanlage mit einem doppelt-gespeisten Asynchrongenerator, die einen Statorpfad und einen Rotorpfad aufweist, der einen rotorseitigen und einen netzseitigen Umrichter (207, 208) aufweist, wobei der Rotorpfad und der Statorpfad in einem Kopplungspunkt (218) münden und gemeinsam über einen Mittelspannungstransformator (209) an ein Mittelspannungsnetz (210) angeschlossen sind, **dadurch gekennzeichnet, dass** jeweils ein Statorschütz (213) in dem Statorpfad und ein Leistungsschalter (214) in dem Rotorpfad vorgesehen sind, wobei eine erste Überspannungsschutzeinrichtung (215) zwischen Mittelspannungstransformator (209) und Statorschütz (213) vorgesehen ist, um das Statorschütz (213) vor Überspannungen aus dem Mittelspannungsnetz (210) zu schützen, wobei eine zweite Überspannungsschutzeinrichtung (216) in dem Statorpfad zwischen dem Statorschütz (213) und dem Stator (204) vorgesehen ist.

2. Windenergieanlage nach Anspruch 1, **dadurch gekennzeichnet, dass** eine dritte Überspannungsschutzeinrichtung (217) in dem Rotorpfad zwischen dem Generatorrotor (205) und dem rotorseitigen Umrichter (207) vorgesehen ist.

3. Windenergieanlage nach Anspruch 1 oder 2, **dadurch gekennzeichnet, dass** mindestens eine der Überspannungsschutzeinrichtungen einen Schutzpegel von U_{P} ≤ 5 kV aufweist.

4. Windenergieanlage nach einem der Ansprüche 1 bis 3, **dadurch gekennzeichnet, dass** die erste Überspannungsschutzeinrichtung (215) zwischen dem Kopplungspunkt (218) und dem Mittelspannungstransformator (209) vorgesehen ist.

5. Windenergieanlage nach einem der Ansprüche 1 bis 4, **dadurch gekennzeichnet, dass** ein Mittelspannungsschalter (212) auf der Netzseite des Mittelspannungstransformators (209) vorgesehen ist.

6. Windenergieanlage nach einem der Ansprüche 1 bis 5, **dadurch gekennzeichnet, dass** ein Eigenbedarfsnetz (211) zwischen der ersten Überspannungsschutzeinrichtung (225) und dem Mittelspannungstransformator (209) vorgesehen ist.

## Claims

1. Wind turbine with a doubly-fed induction generator, having a stator path and a rotor path, the rotor path having a rotor-side and a grid-side converter (207, 208), wherein the rotor path and the stator path end in a connection point (218) and are jointly connected to a medium-voltage grid (210) via a medium-voltage transformer (209), **characterized in that** a stator contactor (213) is provided in the stator path and a circuit breaker (214) is provided in the rotor path, respectively, wherein a first overvoltage protection device (215) is provided between the medium-voltage transformer (209) and the stator contactor (213) to protect the stator contactor (213) from overvoltages from the medium-voltage grid (210), and a second overvoltage protection device (216) is provided in the stator path between the stator contactor (213) and the stator (204).

2. Wind turbine according to claim 1, **characterized in that** a third overvoltage protection device (217) is provided in the rotor path between the generator rotor (205) and the rotor-side converter (207).

3. Wind turbine according to claim 1 or 2, **characterized in that** at least one of the overvoltage protection devices has a protection level of Uₚ ≤ 5 kV.

4. Wind turbine according to any one of claims 1 to 3, **characterized in that** the first overvoltage protection device (215) is provided between the connection point (218) and the medium-voltage transformer (209).

5. Wind turbine according to any one of claims 1 to 4, **characterized in that** a medium-voltage circuit breaker (212) is provided on the grid side of the medium-voltage transformer (209).

6. Wind turbine according to any one of claims 1 to 5, **characterized in that** an auxiliary power system (211) is provided between the first overvoltage protection device (225) and the medium-voltage transformer (209).

## Revendications

1. Éolienne dotée d'un générateur asynchrone à double alimentation, laquelle présente un chemin de stator et un chemin de rotor, lequel présente un convertisseur côté rotor et côté réseau (207, 208), dans laquelle le chemin de rotor et le chemin de stator débouchent sur un point d'accouplement (218) et sont raccordés conjointement à un réseau moyenne tension (210) par le biais d'un transformateur moyenne tension (209), **caractérisée en ce qu'**il est prévu un contacteur de stator (213) dans le chemin de stator et un interrupteur de puissance (214) est prévu dans le chemin de rotor, respectivement, dans laquelle il est prévu un premier dispositif de protection contre les surtensions (215) entre le transformateur moyenne tension (209) et le contacteur de stator (213), pour protéger le contacteur de stator (213) contre des surtensions provenant du réseau moyenne tension (210), dans laquelle il est prévu un deuxième dispositif de protection contre les surtensions (216) dans le chemin de stator entre le contacteur de stator (213) et le stator (204).

2. Éolienne selon la revendication 1, **caractérisée en ce qu'**il est prévu un troisième dispositif de protection contre les surtensions (217) dans le chemin de rotor entre le rotor de générateur (205) et le convertisseur côté rotor (207).

3. Éolienne selon la revendication 1 ou 2, **caractérisée en ce que** l'un au moins des dispositifs de protection contre les surtensions présente un niveau de protection de U_{P} ≤ 5 kV_{.}

4. Éolienne selon l'une des revendications 1 à 3, **caractérisée en ce que** le premier dispositif de protection contre les surtensions (215) est prévu entre le point d'accouplement (218) et le transformateur moyenne tension (209).

5. Éolienne selon l'une des revendications 1 à 4, **caractérisée en ce qu'**il est prévu un commutateur moyenne tension (212) sur le côté réseau du transformateur moyenne tension (209).

6. Éolienne selon l'une des revendications 1 à 5, **caractérisée en ce qu'**il est prévu un réseau de consommation propre (211) entre le premier dispositif de protection contre les surtensions (225) et le transformateur moyenne tension (209).
